# EUROPEAN PATENT SPECIFICATION

(11) **EP 1 873 173 B1**
(45) Date of publication and mention of the grant of the patent: **22.04.2015**
(21) Application number: 06013615.7
(22) Date of filing: 30.06.2006
(51) Int. Cl.: C08F 210/06, C08F 8/50

(54) **High melt flow random polypropylene copolymer**
Random-Polypropylen mit hohem Schmelzflussindex
polypropylène statistique présentant un indice de fluidité élévé

(43) Date of publication of application: 02.01.2008
(73) Proprietor: Borealis Technology Oy, 06101 Porvoo (FI)
(72) Inventor: Myhre, Elina, 3942 Porsgrunn (NO); Jääskeläinen, Pirjo, 06150 Porvoo (FI)
(74) Representative: Grünecker Patent- und Rechtsanwälte PartG mbB

(56) References cited:
- EP-A- 1 186 618
- EP-A- 1 544 219
- EP-A2- 0 985 686
- WO-A-99/24479
- WO-A1-02/12384
- WO-A1-2007/045600
- US-A- 3 607 987
- US-A- 5 246 779

## Description

The present invention concerns a polymer composition, comprising a propylene polymer with a high melt flow rate, providing a good balance of usually conflicting properties, such as transparency, stiffness and flowability. The present invention also concerns a process for preparing such a polymer composition and the use of the polymer composition for preparing molded products.

### Prior art

Propylene polymers are vastly used for packaging applications, including films and foils as well as molded products, in particular thin-walled rigid containers. Typical areas where such propylene polymer packaging materials are employed are the food area, in particular consumer products, such as convenient food, confectionary and bakery, frozen food, ice cream, dairy and yellow fat products, as well as everyday commodities, fruits, spices, seafood and pet food, as well as other areas, such as in the chemical industry or household product and cosmetic industry, where propylene polymer packaging materials are employed for packaging chemicals, paints, adhesives, household chemicals as well as cosmetics.

In the packaging field, high requirements are imposed on various properties of the packaging material, properties which sometimes are conflicting. It is of course necessary that the packaging materials provide a sufficient mechanical integrity, such as stiffness, impact properties etc. in order to enable a safe packaging of the various products. At the same time, the appearance of packaged product is becoming more and more important, so that also optical properties, including stable color, low tendency towards discoloration and transparency are becoming more important. Furthermore, most of the packaging materials mentioned above are mass products so that also a high production speed for such products is required, which increases the demand for materials having a sufficient flowability for the various manufacturing methods, including blow molding, injection molding, casting and foaming processes as well as extrusion and thermoforming processes. In this connection, it furthermore has to be taken into account that, in particular, optical properties and mechanical properties are often conflicting, i.e. the increase of one of those properties most often leads to the decrease of the other one.

Accordingly, there is a high demand for packaging materials, in particular propylene polymers, which provide a good balance of properties, such as flowability, mechanical properties and optical properties.

EP 1544219 A1 discloses impact strength polypropylenes which are degraded with a linear dialkyl peroxide at degradation rates of greater than 5. The polypropylene subjected to such a degradation is preferably a heterophasic copolymer with ethylene contents of up to 20 wt%. The obtained products are described as being suitable for thin-walled packaging with good mechanical properties, requiring no elastomeric modifiers.

WO 02/12384 A1 describes the degradation of propylene polymers with a specific peroxide, namely di-t-amylperoxide, The advantage of using this peroxide according to the disclosure in WO 02/12384 A1 is the possibility to obtain products with acceptable odor profiles.

US 3,607,987 discloses a coating composition comprising a blend of a visbroken copolymer of ethylene and propylene, and an ethylene homopolymer.

### Object of the present invention

In view of the drawbacks associated with the prior art products as discussed above, it is the object of the present invention to provide a propylene polymer, in particular suitable for packaging applications, providing a satisfactory balance of properties, in particular mechanical and optical properties, as well as properties concerning the processibility, such as flowability.

### Brief description of the present invention

The present invention solves the above object by providing a polymer composition as defined in claim 1. The present invention furthermore provides a polymer composition as defined in claim 4. Preferred embodiments are described in the respective sub-claims as well as in the following description. The present invention furthermore provides a process for preparing a polymer composition, molded products, prepared from the polymer composition in accordance with the present invention and the use of a polymer composition in accordance with the present invention for preparing molded products as defined in claims 6, 7 and 11, respectively. Preferred embodiments are again defined in the sub-claims as well as in the following description.

### Detailed description of the invention

Preferably, the MFR₂ value of the propylene polymer in accordance with the present invention is from 70 to 150, more preferably from 75 to 130 and, in particular, from 80 to 120 (g/10 min). Melt flow rates within the range as provided by the propylene polymer in accordance with the present invention enable the preparation of thin-walled articles with complex geometries with high accuracy and fully satisfactory production speeds, since the polymer composition in accordance with the present invention provides a very good flowability in the melt phase. This already demonstrates a clear advantage of the polymer composition in accordance with the present invention over the prior art materials.

Furthermore, the propylene polymer is a random copolymer, wherein the comonomer preferably is at least one member selected from the group of ethylene and C₄-C₂₀-α-olefins, preferably ethylene and C₄-C₁₀-α-olefins, in particular preferably ethylene. The propylene polymer in accordance with the present invention typically comprises one comonomer only, but the present invention also envisages to use two or more comonomers in mixture.

The comonomer content in the propylene polymer in accordance with the present invention typically amounts to from 1 to 7 wt%, more preferably from 2 to 7 wt% and in particular from 2 to 6 wt%.

A particular preferred propylene polymer to be employed in accordance with the present invention is a random propylene copolymer comprising ethylene as only comonomer, in amounts as illustrated above and in embodiments also from 2.5 to 4 wt%, such as 2.5 or 3.5 wt%.

Surprisingly, it has been found by the inventors of the present application that a propylene polymer as defined in claim 1 not only provides the desired processibility, enabling, as outlined above, the preparation of thin-walled articles with complex in geometries, but also provides a, compared with the prior art, superior balance of mechanical and optical properties, such as, in particular, stiffness, impact properties and transparency. This improved balance of properties is illustrated further in the examples provided further below.

As indicated above, the propylene polymer in accordance with the present invention is a random copolymer. In accordance with the present invention, it is envisaged to use unimodal as well as multimodal, in particular bimodal propylene polymers. Bimodal propylene polymers envisaged by the present invention may either be bimodal with respect to the molecular weight distribution, as for example expressed by the melt flow rate and/or bimodal with respect to the comonomer content. Preferably, the propylene polymer in accordance with the present invention is not a heterophasic propylene polymer.

The polymer composition in accordance with the present invention may also comprise additional components, such as usual additives and other polymeric components, which may be selected depending from the desired type of end use. The polymer composition in accordance with the present invention in particular may comprise a nucleating agent, which may be included into the polymer composition in an amount of from 400 to 3000 ppm (by weight) relative to the amount of propylene polymer.

Typical examples of nucleating agents are phosphate derived nucleating agents, sorbitol derived nucleating agents, metal salts of aromatic or aliphatic carboxylic acids, inorganic nucleating agents, in particular talc, as well as polymeric nucleating agent.

Preferred sorbitol derived nucleating agents are nucleating agents such as those sold under the tradename Millad, e.g. Millad 3988 from Milliken.

Preferred polymeric nucleating agents are polymers obtainable by polymerizing a vinyl compound having the formula CH₂CHCHR₁R₂, wherein R₁ and R₂, together with the carbon atom they are attached to, form an optionally substituted, saturated or unsaturated or aromatic ring or a fused ring system, wherein the ring of the fused ring moiety contains 4 to 20 carbon atoms, preferably a 5 to 12-membered saturated or unsaturated or aromatic ring or a fused ring system, or independently represent a linear or branched C₄-C₃₀ alkane, C₄-C₃₀ alkane, C₄-C₂₀ cycloalkane or C₄-C₂₀ aromatic ring. Most preferably, the polymeric nucleating agent is a vinyl cyclohexane polymer.

Nucleating agents as illustrated above may be incorporated into the polymer composition either by post polymerization processes, including admixing the nucleating agent using the master batch technology, or the nucleating agent may already be present during the preparation, i.e. polymerization of the propylene polymer, using, for example, suitably adapted polymerization catalysts, typically catalysts which have been subjected to a prepolymerization in the presence, for example, of a vinyl compound as defined above. Using this technology, suitable amounts of polymeric nucleating agent in particular can be incorporated into the propylene polymer, with a very even and uniform distribution. Reference in this respect can be made to the disclosure in WO 99/24478, WO 99/224479 and WO 00/68315.

The present invention also provides a polymer composition comprising a propylene polymer, wherein the propylene polymer displays a flow property, as measured in a spiral flow test described further below, of more than 26 cm at 600 bar, more than 35 at cm 1000 bar, more 45 cm at 1400 bar. Preferred embodiments of this polymer composition are defined in the sub-claims and described in the present specification in connection with the polymer composition in accordance with claim 1. The polymer composition of this embodiment of the present invention provides the same improvements over the prior art materials as outlined above, in particular the improved balance of properties concerning flow properties (production speed and production accuracy) as well as optical and mechanical properties.

More preferably, the propylene polymer in accordance with this embodiment displays a flow properties, measured as indicated above, of 29 cm or more at 600 bar, of 40 cm or more at 1000 bar and of 49 cm or more at 1400 bar.

Typically, the polymer composition in accordance with the present invention provides molded articles having very satisfactory optical properties, such as illustrated by haze values (determined with molded test specimens having a thickness of 1 mm, prepared and tested as described further below) of less than 30%, preferably less than 20% and more preferably less than 15%. The polymer composition in accordance with the present invention typically provides further satisfactory mechanical properties, such as values for tensile modulus (determined as described further below) of from 250 to 1600, preferably 250 to 1400 and more preferably from 350 to 1400 (MPa), drop height more than 0,8 m, preferably more than 0,9m, most preferably more than 1 m and top load more than 190N, more preferably more than 200 N, most preferably more than 220N. The propylene polymer in accordance with the present invention typically has a melting temperature (Tm; °C; determined as described below) of from 130 to 160, preferably 130 to 155 and more preferably from 135 to 155. Accordingly, the propylene polymer enables a satisfactory processability, requiring in particular temperatures for the preparation of molded articles which are not detrimental to the polymer composition or to any of the usual additives employed therewith.

As already identified above, the polymer composition in accordance with the present invention is, in particular, suitable for preparing molded articles, in particular by injection molding processes, wherein the molded articles are, in particular, thin-walled packaging products which may have a complex geometry. With the thin-walled articles the present application intends to describe articles comprising at least a part having a wall thickness of less than 1.5 mm, or having a ratio of flow length to wall thickness of larger than 200.

As defined in claim 6, the polymer composition in accordance with the present invention, in particular, can be obtained by subjecting a propylene polymer to visbreaking, preferably at visbreaking ratios (visbreaking ratio: final MFR₂ divided by initial MFR₂) of from 6.5 to 15, wherein the propylene polymer to be employed in accordance with the present invention is a random copolymer as defined herein. Surprisingly, it has been found that subjecting a propylene polymer as defined herein to visbreaking provides the polymer composition as defined herein, having in particular the highly desirable balance of mechanical properties, optical properties and processing properties, enabling in particular, as outlined above, the preparation of thin-walled packaging articles having complex geometries by injection molding with high accuracy and high production speeds. Contrary to propylene homopolymers, the present invention provides the surprising finding that the desired balance of properties can be obtained when using propylene polymers as defined herein. Propylene homopolymers known from the art clearly show a degradation of the balance of properties when subjecting propylene homopolymers to visbreaking.

Accordingly, the present invention furthermore provides, as already indicated above, a polymer composition obtainable by visbreaking a propylene polymer at a visbreaking ratio of typically from 6.5 to 15, wherein the propylene polymer is a random copolymer, as defined in claim 10.

The visbreaking ratio to be employed in accordance with the present invention more preferably is from 7 to 15, in particular from 10 to 15.

Visbreaking may be carried out in any known manner, but typically the present invention envisages chemical visbreaking using a peroxide visbreaking agent. Typical visbreaking agents are, in particular, peroxide sold under the tradenames Trigonox 101 and Trigonox 301, both available from Akzo. Suitable amounts of peroxide to be employed in accordance with the present invention are in principle known to the skilled person and can easily be calculated on the basis of the amount of propylene polymer to be subjected to visbreaking, the MFR₂ value of the propylene polymer to be subjected to visbreaking and the desired target MFR₂ of the product to be obtained. Typical amounts of peroxide visbreaking agent are, however, from 0.01 to 0.1 wt%, based on the amount of propylene polymer employed. Typically, visbreaking in accordance with the present invention is carried out in an extruder, so that under the suitable conditions, an increase of melt flow rate is obtained. During visbreaking, higher molar mass chains of the starting product are cleared statistically more frequently than lower molar mass molecules, resulting in an overall decrease of the average molecular weight and an increase in melt flow rate. Suitable visbreaking degrees and visbreaking conditions are illustrated in the examples below.

The propylene polymer to be subjected to visbreaking in accordance with the present invention may be any type of propylene polymer, as long as it is a random copolymer as defined herewith. Preferably, the propylene polymer is not a heterophasic propylene composition. However, the present invention envisages to use unimodal propylene polymers as well as multimodal propylene polymers, which may in particular be bimodal with respect to the molecular weight distribution, expressed for example as melt flow rate and/or comonomer content. The propylene polymers to be employed in accordance with the present invention, as identified above, are random copolymers and the preferred embodiments with respect to type of comonomers and comonomer contents as illustrated above in connection with the description of claim 1 also apply with respect to the description provided here for claims 4 and 6.

As identified above, the propylene polymer to be employed in accordance with the present invention may be bimodal with respect to the comonomer content as well as with respect to the type of comonomer. Furthermore, the present invention also envisages the use of propylene polymers which are bimodal with respect to the molecular weight distribution, which may be expressed with respect to the melt flow rate. In the case of multimodal, in particular bimodal propylene polymers with respect to the molecular weight distribution, the propylene polymer comprises at least a lower molecular weight component (LMW) and a higher molecular weight component (HMW). The lower molecular weight component has a higher MFR than the higher molecular weight component. The ratio between the MFR₂ value of the LMW and the MFR₂ value of the HMW component is not critical and may be selected from a broad range of, for example, at least 3, more preferably at least 4, more preferably at least 10, and in embodiments also up to 100 or up to 150. The respective amounts of LMW component and HMW component also may be selected in accordance with the desired end application, and the amount of LMW component is typically between 30 to 70 wt%, preferably 40 to 60 wt%, based on the total amount of propylene polymer.

According to a preferred embodiment of the present invention, the propylene polymer to be employed is a reactor made polymer. Reactor made polymers define products which are obtained from a polymerization reaction of olefin monomers, meaning that a reactor made polymer is the polymerization product as obtained from the polymerization step. Such a reactor made polymer accordingly is a different embodiment compared with mechanical blends, wherein a first polymer is produced in the absence of any further polymeric components and then blended mechanically with a second component.

Concerning the polymerization process suitable for preparing propylene polymers to be employed in accordance with the present invention in principle any polymerization methods, including solution, slurry and gas phase polymerizations can be used.

In the following, a preferred process for preparing a random propylene polymer to be employed in the present invention is described.

When the polymer is unimodal with respect to the molecular weight distribution and comonomer distribution, it may be prepared in a single stage process e.g. as slurry or gas phase process in a slurry or gas phase reactor. Preferably, the such unimodal material, however, is produced in a multistage process using at each stage process conditions as illustrated further below.

The random copolymer to be used in accordance with the present invention may be prepared by polymerizing, in a slurry reactor, for example a loop reactor, propylene monomers together with one or more comonomers, in the presence of a polymerization catalyst to produce a part of the random copolymer. This part is then transferred to a subsequent gas phase reactor, wherein in the gas phase reactor propylene monomers are reacted in the presence of suitably selected comonomers in order to produce a further part in the presence of the reaction product of the first step. This reaction sequence provides a reactor blend of parts (i) and (ii) constituting a random copolymer. It is of course possible by the present invention that the first reaction is carried out in a gas phase reactor while the second polymerization reaction is carried out in a slurry reactor, for example a loop reactor. It is furthermore also possible to reverse the order of producing parts (i) and (ii), which has been described above in the order of first producing part (i) and then producing part (ii). The above-discussed process, comprising at least two polymerization steps, is advantageous in view of the fact that it provides easily controllable reaction steps enabling the preparation of a desired reactor blend. The polymerization steps may be adjusted, for example by appropriately selecting monomer feed, comonomer feed, hydrogen feed, temperature and pressure in order to suitably adjust the properties of the polymerization products obtained. It is in particular possible to obtain the preferred multimodality, preferably the bimodality, of the random copolymer, with respect to the ethylene distribution as well as with respect to the molecular weights and MFR₂ values during said multistage polymerization procedures.

Such a process can be carried out using any suitable catalyst for the preparation of propylene monomers, including. Preferably, the process as discussed above is carried out using a Ziegler-Natta catalyst, in particular a high yield Ziegler-Natta catalyst (so-called fourth and fifth generation type to differentiate from low yield, so called second generation Ziegler-Natta catalysts). A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg-based catalyst component and typically the co-catalyst is an Al-alkyl based compound. Suitable catalysts are in particular disclosed in US 5,234,879, WO 92/19653, WO 92/19658 and WO 99/33843,

A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg based catalyst component and typically the co-catalyst is an Al-alkyl based compound. Suitable catalysts are in particular disclosed in US 5,234,879, WO 92/19653, WO 92/19658 and WO 99/33843.

Preferred external donors are the known silane-based donors, such as dicyclopentyl dimethoxy silane or cyclohexyl methyldimethoxy silane.

One embodiment of a process as discussed above is a loop-gas phase process, such as developed by Borealis, known as Borstar^{®} technology, described for example in EP 0887379 A1 and WO 92/12182, incorporated herein by reference.

With respect to the above-mentioned preferred slurry-gas phase process, the following general information can be provided with respect to the process conditions.

Temperature of from 40°C to 110°C, preferably between 60°C and 100°C, in particular between 80°C and 90°C, with a pressure in the range of from 20 to 80 bar, preferably 30 to 60 bar, with the option of adding hydrogen in order to control the molecular weight. The reaction product of the slurry polymerization, which preferably is carried out in a loop reactor, is then transferred to the subsequent gas phase reactor, wherein the temperature preferably is within the range of from 50°C to 130°C, more preferably 80°C to 100°C, at a pressure in the range of from 5 to 50 bar, preferably 15 to 35 bar, again with the option of adding hydrogen in order to control the molecular weight.

The residence time can vary in the reactor zones identified above. In embodiments, the residence time in the slurry reaction, for example the loop reactor, is in the range of from 0.5 to 5 hours, for example 0.5 to 2 hours, while the residence time in the gas phase reactor generally will be from 1 to 8 hours.

The properties of the random copolymer produced with the above-outlined process may be adjusted and controlled with the process conditions as known to the skilled person, for example by one or more of the following process parameters: temperature, hydrogen feed, comonomer feed, propylene feed, catalyst, type and amount of external donor, split between two or more components of a multimodal polymer.

As indicated in the claims, the present invention also provides molded articles, prepared from the polymer compositions in accordance with the present invention, preferably obtained by the process in accordance with the present invention. Examples of typical molded articles are rigid containers for packaging purposes. Preferably, these molded articles are produced by injection molding, in particular since the polymer compositions in accordance with the present invention enable the preparation of such molded products with high accuracy and high production speeds due to the improved flow properties.

The molded articles obtained in accordance with the present invention, in particular thin-walled articles with complex geometries, provide highly satisfactory mechanical properties, such as drop height and top load illustrated and determined in the following examples in accordance with the methods as described herein. Furthermore, the molded articles do provide highly satisfactory visual appearance, such as transparency and low discoloration and reduced tendency towards discoloration.

**Definitions and determination methods used in the claims, above description, below examples:**
MFR₂, unless otherwise specified, is measured MFR₂ in accordance with ISO 1133 (230°C, 2.16 kg load)
Comonomer content (wt%) is determined in a known manner based on FTIR, calibrated with C13NMR.

Melting temperature, crystallization temperature and degree of crystallinity are measure with a Mettlas TA820 differential scanning calorimetry device (DSC) on 3±0.5 mg samples. Crystallization and melting temperatures are obtained during 10°C/min cooling and heating scans between 30 and 225 °C. Melting and crystallization temperatures were taken as peaks of endotherms and exotherms. The degree of crystallinity is calculated by comparison with the heat of fusion of a perfectly crystalline polypropylene, i.e. 209 J/g.

Charpy notched impact is measured according to ISO 179 (room temperature, if not otherwise mentioned) using injection molded test specimen as described in ENISO 1873-2 (80x10x4 mm).

Tensile strength, including tensile stress at yield and strain at yield, is measured according to ISO 572-2 (cross head speed 50 mm/min). Tensile modulus is measured according to ISO 572-2 (cross head speed 1 mm/min).

Haze and transparency are determined from 1 mm (or 2 mm when specified) injection molded plaque samples according to ASTMD 1003.

### Top load

The compression test used to measure the rigidity of injection molded 850 ml cups followed the method of standard test ASTM 2659-95 on a Zwich tensile machine operated at a velocity of 10 mm/min.

Dimensions of the cup: height 100mm, Diameter top 115mm, Diameter bottom 95mm, bottom wall thickness 0,44mm, wall thickness walls 0,38mm.

### Drop height test

was performed on cups at 23°C according to ASTM-D 2463-95. The height at which 50% of the cups break in a brittle way, F50, was recorded

### Spiral flow

Spiral Test is carried out using an Engel ES330/65 cc90 injection molding apparatus with a spiral mould and pressure of 600, 1000 or 1400 bar
screw diameter: 35 mm
max. piston displacement: 150 cm3
spec. injection pressure: 600, 1000, or 1400 bar
tool form: oval form; provided by Axxicon; thickness 2 mm, 1 mm or 3mm, breadth: 5 mm temperature in pre-chamber and die: 230°C
temperature in zone 2/zone 3/zone 4/zone 5: 230°C/230°C/225°C/200°C
injection cycle: injection time including holding: 15 s
cooling time: 15 s
injection pressure: Follows from the predetermined length of the testing material.
dwell pressure = injection pressure
screw speed: 30 rpm
system pressure: 160 bar
metering path: Metering stroke should be set so the screw stops 20mm before final position by end of the holding pressure.
tool temperature: 40°C

The spiral flow length can be determined immediately after the injection operation.

The following examples illustrate the present invention further.

### Examples

Propylene polymers were subjected to visbreaking using a peroxide visbreaking agent in an extruder, providing polymer compositions in accordance with the present invention (Examples 1 to 4) as well as one comparative example (Reference) (MFR₂ value lower than required by the present invention). The obtained polymer compositions were subjected to various tests, the results of which are summarized in Tables 1 and 2. The examples as provided clearly demonstrate that the compositions in accordance with the present invention show a better overall balance of property, compared with the reference examples, using a commercially available random polypropylene.

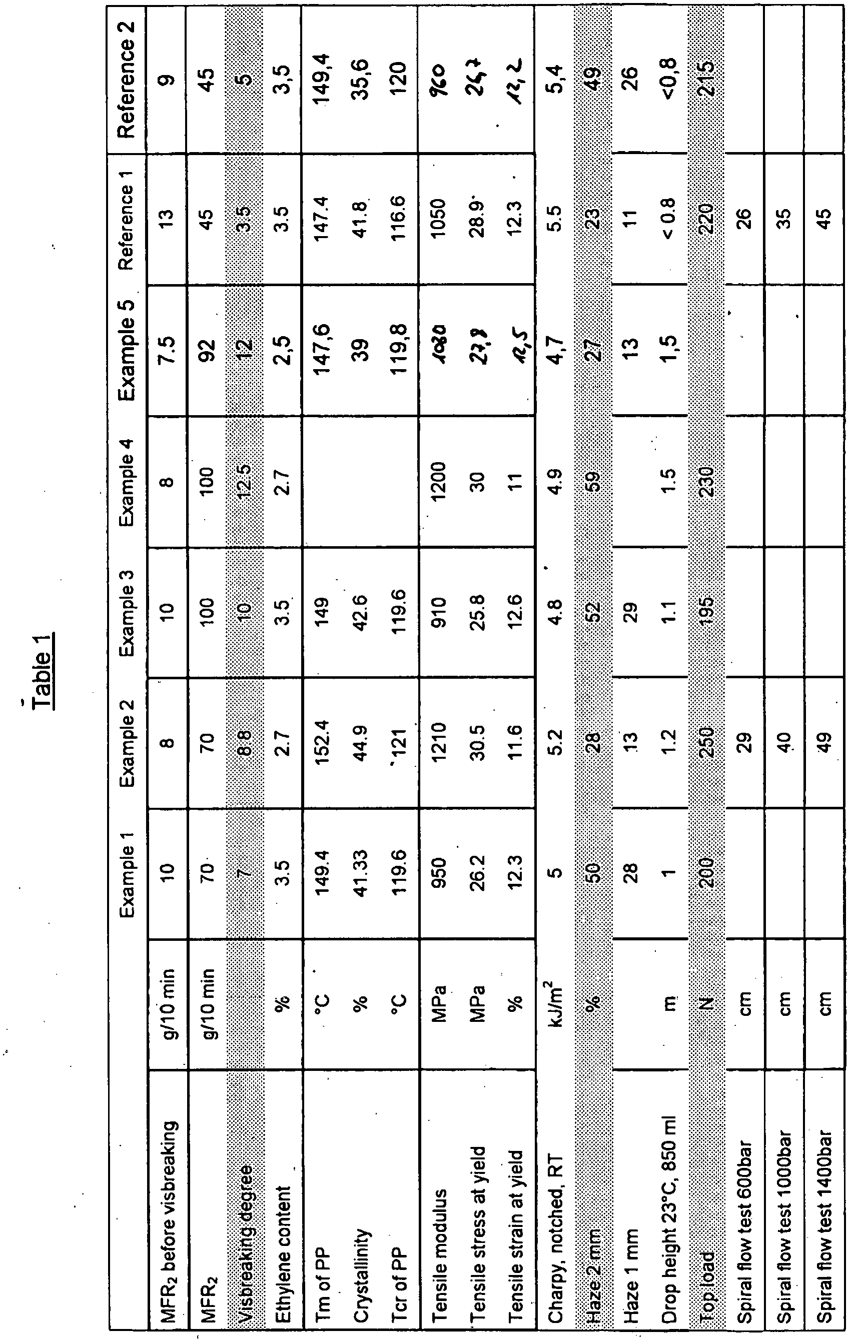

The propylene polymers were prepared as summarized in Table 2 (see also WO 99/24478, Example 8), using a multistage polymerization process comprising a prepolymerization, a polymerization in a loop reactor (slurry polymerization), followed by a final polymerization in a gas phase reactor. The obtained polymer products were visbroken by using Trigonox 101 from Akzo Nobel and compounded with the following additives; Irganox B215 (1500 ppm), DHT-4A (400 ppm) for example 1, 3 and in addition Gel All E200 (1800 ppm), Gel All MD-LM30 and Millad 3988 (1700 ppm) for example 2, 4, 5 respectively. Reference 1 also contained Millad 2988 (1700 ppm).

The results as obtained are summarized in Table 1 above.

**Table 2**

| | **Ex. 1 and Ex. 3** | **Ex. 5** | **Ex. 2 and Ex. 4** |
|---|---|---|---|
| | | | |

| Donor type | Dicyclopentyl dimethoxy silane | Dicyclopentyl dimethoxy silane | Dicyclopentyl dimethoxy silane |
|---|---|---|---|
| Catalyst feed (g/h) | 1,3 | 0,9 | 1 |
| Cocatalyst feed (g/t propylene) | 73 | 150 | 150 |
| Al/Ti ratio (mol/mol) | 200 | 376 | 250 |
| Al/donor ratio (mol/mol) | 10 | 10 | 10 |
| **Prepol** | | | |
| Temperature (°C) | 30,0 | 30,0 | 30.0 |
| **Loop** | | | |
| Temperature (°C) | 80,0 | 70,0 | 70.0 |
| Split % | 63 | 41 | 50 |
| MFR2 (g/10 min) | 11,3 | 8,8 | 8.0 |
| XS (%) | 2,2 | 4,8 | 6 |
| C2 content (%) | 2,1 | 1,9 | 2.7 |
| **GPR** | | | |
| Temperature (°C) | 85 | 80 | 80 |
| Split % | 37 | 59 | 50 |
| MFR2 (g/10 min) | 9,4 | 7,6 | 8 |
| XS (%) | 4,2 | 4,4 | 5 |
| Ethylene content (%) | 3,1 | 2,5 | 2.7 |

The catalysts employed were as follows:
Examples 1 and 3 as well as reference 2: WO 00/68315, example 1
Examples 2 and 4: US 5234879
Example 5: WO 04/29112, Example 8, but with diethylaluminium chloride used instead of triethyl aluminium.

The examples in accordance with the present invention provide an improved balance of mechanical and optical properties associated with very good flow properties, so that the polymer compositions are suitable for the desired applications as identified in the present application.

## Claims

1. Polymer composition, comprising a propylene polymer, wherein the propylene polymer displays a flow property of more than 26 cm at 600 bar, more than 35 cm at 1000 bar and more than 45 cm at 1400 bar, in a spiral flow test, wherein the propylene polymer is a random propylene copolymer comprising ethylene as only comonomer, and wherein the propylene polymer is not a heterophasic propylene copolymer, and wherein the polymer composition further comprises a nucleating agent.

2. Polymer composition in accordance with claim 1, wherein the propylene polymer is a propylene copolymer comprising from 1 to 7 wt% of comonomer.

3. Polymer composition in accordance with claim 2, wherein the comonomer content amounts to 2 to 7 wt%, more preferably 2 to 6 wt%.

4. Polymer composition in accordance with any of the preceding claims, which is obtainable by visbreaking the propylene polymer at a visbreaking ratio of from 6.5 to 15.

5. Polymer composition in accordance with claim 4, wherein the visbreaking ratio is from 7 to 15, preferably from 10 to 15.

6. Process for preparing a polymer composition in accordance with any of claims 1 to 5, comprising subjecting the propylene polymer to visbreaking at a visbreaking ratio of from 6.5 to 15.

7. Molded product, comprising a polymer composition in accordance with any of claims 1 to 5 or obtained in accordance with claim 6.

8. Molded product in accordance with claim 7, selected from containers and, packaging material.

9. Molded product in accordance with claim 7, having a drop height of more than 0.8 m when tested according to a ASTM-D-2463-95.

10. Molded product in accordance with any of claims 7 to 9, having a top load of more than 190 N and a haze of lower than 30% when measured with 1 mm injection molded plaques according to ASTM1003.

11. Use of a polymer composition in accordance with any of claims 1 to 5 or obtained in accordance with claim 6 for the preparation of molded products.

## Patentansprüche

1. Polymerzusammensetzung, umfassend ein Propylenpolymer, wobei das Propylenpolymer eine Fließeigenschaft von mehr als 26 cm bei 600 bar, mehr als 35 cm bei 1.000 bar und mehr als 45 cm bei 1.400 bar in einem Spiralfließtest aufweist, wobei das Propylenpolymer ein Random-Propylencopolymer ist, umfassend Ethylen als einziges Comonomer, und wobei das Propylenpolymer nicht ein heterophasisches Propylencopolymer ist, und wobei die Polymerzusammensetzung zusätzlich ein Nukleierungsmittel umfasst.

2. Polymerzusammensetzung gemäß Anspruch 1, wobei das Propylenpolymer ein Propylencopolymer ist, umfassend von 1 bis 7 Gew.-% an Comonomer.

3. Polymerzusammensetzung gemäß Anspruch 2, wobei der Comonomeranteil 2 bis 7 Gew.-%, mehr bevorzugt 2 bis 6 Gew.-%, beträgt.

4. Polymerzusammensetzung gemäß einem der vorhergehenden Ansprüche, welche durch Visbreaking des Propylenpolymers bei einem Visbreaking-Verhältnis von 6,5 bis 15 erhältlich ist.

5. Polymerzusammensetzung gemäß Anspruch 4, wobei das Visbreaking-Verhältnis von 7 bis 15, bevorzugt von 10 bis 15, ist.

6. Verfahren zum Herstellen einer Polymerzusammensetzung gemäß einem der Ansprüche 1 bis 5, umfassend das Unterziehen des Propylenpolymers einem Visbreaking bei einem Visbreaking-Verhältnis von 6,5 bis 15.

7. Geformtes Produkt, umfassend eine Polymerzusammensetzung gemäß einem der Ansprüche 1 bis 5 oder erhalten gemäß Anspruch 6.

8. Geformtes Produkt gemäß Anspruch 7, ausgewählt aus Behältern und Verpackungsmaterial.

9. Geformtes Produkt gemäß Anspruch 7, das eine Fallhöhe von mehr als 0,8 m besitzt, wenn gemäß ASTM-D-2463-95 getestet wird.

10. Geformtes Produkt gemäß einem der Ansprüche 7 bis 9, das eine Belastung (top load) von mehr als 190 N und eine Trübung von weniger als 30 % besitzt, wenn mit 1 mm spritzgegossenen Platten gemäß ASTM1003 gemessen wird.

11. Verwendung einer Polymerzusammensetzung gemäß einem der Ansprüche 1 bis 5 oder erhalten gemäß Anspruch 6 zur Herstellung von geformten Produkten.

## Revendications

1. Composition polymère comprenant une polymère propène, dans laquelle le polymère propène présente, dans un test d'écoulement en spirale, une propriété d'écoulement de plus de 26 cm à 600 bar, de plus de 35 cm à 1000 bar et de plus de 45 cm à 1400 bar, dans laquelle le polymère propène est un copolymère propène aléatoire comprenant de l'éthylène comme seul comonomère, dans laquelle le polymère propène n'est pas un copolymère propène hétérophasique, et dans laquelle la composition polymère comprend en outre un agent de nucléation.

2. Composition polymère selon la revendication 1, dans laquelle le polymère propène est un copolymère propène comprenant de 1 % à 7 % en masse de comonomère.

3. Composition polymère selon la revendication 2, dans laquelle la teneur en comonomère est de 2 % à 7 % en masse, et de préférence de 2 % à 6 % en masse.

4. Composition polymère selon l'une quelconque des revendications précédentes, pouvant être obtenue par viscoréduction du polymère propène avec un rapport de viscoréduction de 6,5 à 15.

5. Composition polymère selon la revendication 4, dans laquelle le rapport de viscoréduction est de 7 à 15, et de préférence de 10 à 15.

6. Processus de préparation d'une composition polymère selon l'une quelconque des revendications 1 à 5, comprenant la soumission du polymère propène à une viscoréduction avec un rapport de viscoréduction de 6,5 à 15.

7. Produit moulé comprenant une composition polymère selon l'une quelconque des revendications 1 à 5 ou obtenu conformément à la revendication 6.

8. Produit moulé selon la revendication 7, sélectionné parmi des récipients et des matériaux d'emballage.

9. Produit moulé selon la revendication 7, présentant une hauteur de chute supérieure à 0,8 m lors d'un essai selon la norme ASTM-D-2463-95.

10. Produit moulé selon l'une quelconque des revendications 7 à 9, présentant une charge de compression supérieure à 190 N et une turbidité inférieure à 30 % telle que mesurée avec des plaques moulées par injection de 1 mm selon la norme ASTM1003.

11. Utilisation d'une composition polymère selon l'une quelconque des revendications 1 à 5 ou obtenue conformément à la revendication 6 pour la préparation de produits moulés.
